# EUROPEAN PATENT SPECIFICATION

(11) **EP 4 537 960 B1**
(45) Date of publication and mention of the grant of the patent: **08.04.2026**
(21) Application number: 23203551.9
(22) Date of filing: 13.10.2023
(51) Int. Cl.: B23B 1/00, B23B 27/14, G05B 19/402

(54) **A METHOD FOR ADJUSTING THE ORIENTATION OF A CUTTING EDGE OF A TURNING TOOL**
VERFAHREN ZUR EINSTELLUNG DER AUSRICHTUNG EINER SCHNEIDKANTE EINES DREHWERKZEUGS
PROCÉDÉ DE RÉGLAGE DE L'ORIENTATION D'UN BORD DE COUPE D'UN OUTIL DE TOURNAGE

(43) Date of publication of application: 16.04.2025
(73) Proprietor: AB Sandvik Coromant, 811 81 Sandviken (SE)
(72) Inventor: WIKBLAD, Krister, 811 81 Sandviken (SE); LÖF, Ronnie, 811 81 Sandviken (SE); WICKSTRÖM, David, 811 81 Sandviken (SE)
(74) Representative: Sandvik

(56) References cited:
- JP-A- 2006 136 985
- SU-A1- 1 219 257
- US-A1- 2021 299 806
- US-B2- 8 257 149

## Description

### TECHNICAL FIELD

The invention relates to metal cutting, in particular turning. More precisely, the invention relates to a method according to the preamble of claim 1. An example of such a method is known from SU1219257A1.

### BACKGROUND ART

Turning is a common metal cutting operation wherein a turning tool is used to cut a rotating workpiece. Such turning tool often includes a cutting insert, for example made from cemented carbide. The cutting insert is often mounted in a seat arranged in the turning tool, for example using a screw or some other fastening mechanism. Some cutting inserts have cutting edges that include not only a nose cutting edge, but also a so called "wiper" edge that may result in a better surface finish by smoothing out the scallops in the machined surface. A wiper edge usually consists of one or more large radiused, often nearly straight, edge segments following the nose cutting edge and that "wipes" the surface behind the nose cutting edge.

Even if using a wiper cutting edge a machined surface may sometimes have a quality that is below expectations, for example with respect to surface roughness. One way to improve the surface roughness could be to reduce the feed rate. However, this would affect the productivity in a negative way.

Accordingly, there is a need for turning solutions that provides a better control of the resulting quality of the machined surface and improve the machining results with maintained productivity.

### SUMMARY

It is an object of the present invention to mitigate the shortcomings of the prior art and to provide methods for turning tools having a cutting edge that includes a wiper edge that results in improved surface finish of the machined surface.

Thus, the invention relates to a method for adjusting the orientation of a cutting edge of a turning tool with respect to a workpiece, wherein the cutting edge includes a wiper edge, and wherein the method comprises the steps of:
- machining a surface of the workpiece using the turning tool;
- measuring a first topography of the machined surface;
- determining a misalignment of the wiper edge with respect to the surface based on the first topography of the machined surface;
- adjusting the orientation of the cutting edge with respect to the workpiece based on the misalignment.

Thereby, the cutting edge of the turning tool can be correctly oriented with respect to the workpiece, such that an improved surface finish is achieved.

When mounted in the seat, the cutting insert obtains a fixed position in which the exact location and orientation of the cutting edge, and in particular the wiper edge, with respect to the turning tool body may not be completely known, but depend on various parameters, such as random variations or defects in the geometry of the cutting insert. Moreover, additional uncertain parameters related to the machine tool, or the setup of the workpiece, may affect the actual orientation of the cutting edge with respect to the machined surface. The inventors have found that such variations, and the negative effects of such variations, are often greater than usually assumed. In particular, the inventors have found that the orientation of the wiper edge with respect to the workpiece surface is detrimental for achieving a good surface finish, and that a misalignment of the wiper edge with respect to the workpiece surface may be determined by measuring and studying the topography of the machined surface.

The cutting edge may be a part of an exchangeable and/or indexable cutting insert arranged in a seat of the turning tool. It is also envisaged though, that the cutting edge is an integral portion of the turning tool.

Measuring the topography of the machined surface may involve the use of a measuring device, such as a perthometer or a profilometer, for example using non-contact techniques, e.g., based on optical methods, or a stylus contacting the surface.

The topography of a machined surface, as used herein, should be understood as any measure that characterizes the geometry of the machined surface and that is dependent on a misalignment of the wiper edge with respect to the machined surface.

Adjusting the orientation of the cutting edge may be done in many different ways. For example, the adjustment may involve adjusting the orientation of the turning tool, but may also involve adjustment of only a portion of the turning tool that includes the cutting edge. For example, if the turning tool includes an exchangeable cutting insert, the adjustment may involve adjusting the orientation of the cutting insert within the seat in which it is mounted. Alternatively, the turning tool may include a cutting head that holds the cutting insert and that is moveable with respect to a tool body of the turning tool. For example, the cutting head may be slightly rotatable or tiltable such that the orientation of the cutting edge with respect to the workpiece can be changed. Preferably, the cutting head may include a locking arrangement that prevents movement of the cutting head when in a locked state. The turning tool may also include a control device that can be used to change the position of the cutting head when the locking arrangement is in an unlocked state. Preferably, a visible scale is arranged on the cutting head and tool body, such that a position of the cutting head with respect to the tool body can be readily assessed.

According to some embodiments, the misalignment is defined by an angle of misalignment that corresponds to the angle that the wiper edge forms to the machined surface, and wherein an angle of zero degrees corresponds to no misalignment.

As discussed, the wiper edge may not be formed by a completely straight edge, but by one or more large radius segments. However, for the purposes of this disclosure, the wiper edge may be considered as, i.e., approximated by, a straight edge forming a specific angle with respect to the machined surface. If the wiper edge is parallel with the machined surface, i.e., if the angle is zero, there is no misalignment of the wiper edge with respect to the surface.

According to some embodiments, the topography may correspond to a profile of the machined surface. A profile of a surface is generally understood as a contour of the surface in a section, in this case preferably a section parallel with the feed direction of the turning tool. The profile may be the raw profile as directly obtained by the measuring device, e.g., profilometer, but it may also be a filtered profile, in which variations that are not relevant for the determination of misalignment of the wiper edge have been removed. For example, the profile may be a primary profile (P-profile) in which the shortest wavelength components have been removed from the measured profile by low-pass filtering, or a roughness profile (R-profile) wherein high-pass filtering has been applied to the P-profile to remove longer wavelength components such that the profile only includes the surface roughness. The profile of a surface may be determined by a profilometer, for example.

According to some embodiments, the profile includes multiple ridges extending from a nominal machined surface, wherein each ridge, in the feed direction, includes an ascending portion extending to a peak of the ridge from a valley located at the nominal machined surface between the ridge and a preceding ridge, followed by a descending portion extending from the peak of the ridge to a valley located at the nominal machined surface between the ridge and a following ridge, and wherein the misalignment of the wiper edge is determined based on the length and inclination of the ascending portions and/or the descending portions with respect to the nominal machined surface. According to some embodiments, if at least one of the ascending portion and the descending portion of each ridge is longer than the adjacent valley, the internal angle between the nominal machined surface and the longest one of the ascending portion and the descending portion is identified as the angle of misalignment.

Accordingly, the misalignment of the wiper edge, e.g., the angle of the wiper edge with respect to the machined surface, can be directly determined from the profile of the surface.

The nominal machined surface should be understood as the surface without any ridges, which may correspond to the desired (intended) machined surface of the workpiece. Thus, in the profile, the nominal machined surface corresponds to a line including all the valleys.

If the valleys between the ridges are longer than the ascending and descending portions of the ridges (or if there are no ridges at all), this would indicate a wiper edge that is well aligned with respect to the machined surface, i.e., wherein the wiper edge is parallel to the machined surface. However, if the ascending portion or the descending portion of the ridges are longer than the valleys, then the wiper edge is to some extent misaligned, i.e., non-parallel with respect to the machined surface, and the misalignment would then correspond to the internal angle formed between the nominal machined surface and the ascending or descending portion, whichever is longest.

According to some embodiments, the angle of misalignment is identified as negative if the descending portion is longer than the ascending portion, and positive if the ascending portion is longer than the descending portion. Thus, it is also possible to determine the direction in which the wiper edge is misaligned with respect to the workpiece.

According to some embodiments, the topography may be defined by a parameter of the roughness of the surface, such as the average roughness Ra or the mean roughness depth Rz of a profile of the surface. As well-known in the art, the average roughness Ra is defined as an arithmetic average of profile height deviations from a mean line of the profile, whereas the mean roughness depth Rz is the average of maximum peak to valley heights of the profile.

If it is known what parameter of the roughness that could be expected with a perfectly aligned wiper edge, a misalignment can be identified simply by detecting a roughness that differs from the expected roughness, and an adjustment of the orientation of the cutting edge can be made accordingly. An identified parameter of the surface roughness that deviates from the expected value may not indicate in what direction the wiper edge is misaligned with respect to the workpiece. Therefore, in embodiments wherein a parameter of the surface roughness is used as a measure of the topography, multiple re-orientations of the cutting edge in different directions may be required to identify the optimal orientation of the cutting edge (the orientation wherein there is no misalignment of the wiper edge with respect to the machined surface). If the surface roughness that could be expected with a perfectly aligned wiper edge is unknown, the method may nevertheless be used and would involve multiple re-orientations of the cutting edge in different directions. Hence, according to some embodiments, the method further includes, after measuring the first topography of the surface and before determining the misalignment, performing one or more times the steps of:
- changing the orientation of the cutting edge with respect to the workpiece,
- machining a surface of the workpiece using the turning tool,
- measuring a comparative topography of the machined surface,
and wherein the misalignment of the wiper edge is determined based on the difference between the first topography and the one or more comparative topographies.

Accordingly, this would require more than one, such as at least three, cuts before the correct orientation of the cutting edge is found. However, multiple cuts using different orientations may not necessarily be a problem since many components are anyway machined in multiple passes, wherein a small amount of material is removed from the workpiece in each pass of the turning tool.

This trial-and-error approach would, after multiple re-orientations of the cutting edge, make it possible to determine the misalignment of the wiper edge with respect to the surface, i.e., as the difference between the orientation that resulted in the first topography and the orientation that was found to result in an optimal comparative topography (or at least a comparative topography that is the result of a better aligned wiper edge than used to create the first topography). Based on this, the orientation of the cutting edge can be adjusted accordingly before the final pass(es) of the turning tool.

The embodiments referred to above, involving analyzing either the geometry of the ridges in the profile or a parameter of the roughness, are based on assessment of one or more profiles of the surface, as measured for example by a profilometer or a similar measurement device. In other embodiments, other measures of the topography of the machined surface may be used.

### BRIEF DESCRIPTION OF DRAWINGS

The solution will now be described in more detail by means of exemplary embodiments and with reference to the accompanying drawings, in which:
Fig. 1 illustrates a turning tool that can be used in a method according to the invention.
Fig. 2 is an enlarged view of the cutting insert mounted in a seat of the turning tool.
Fig. 3 is a top view of the turning tool.
Fig. 4 illustrates a machined surface of a workpiece and an orientation of a turning tool corresponding to no misalignment of the wiper edge.
Fig. 5 illustrates a machined surface of a workpiece and an orientation of a turning tool corresponding to negative misalignment of the wiper edge.
Fig. 6 illustrates a machined surface of a workpiece and an orientation of a turning tool corresponding to positive misalignment of the wiper edge.
Fig. 7 is a flowchart illustrating a method according to the invention.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

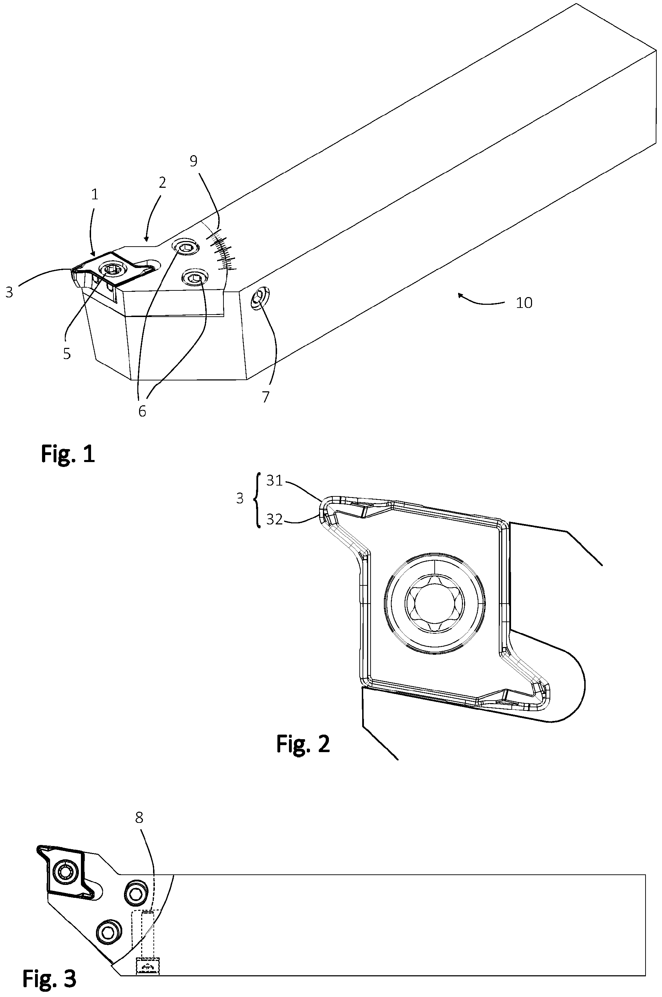

Figs. 1-3 illustrate a turning tool including a tool body 10 and a cutting insert 1 comprising a cutting edge 3. The cutting insert 1 is located on a cutting head 2 that is adjustably arranged with respect to the tool body 10. The cutting insert 1 is mounted in an insert seat on the cutting head 2 by means of a fastening screw 5.

The cutting edge 3 includes a nose cutting edge 31 and a wiper edge 32, as illustrated in fig. 2.

In the illustrated embodiment, the position of the cutting head 2 in relation to the tool body 10 can be adjusted by first unscrewing two locking screws 6 and then controlling an adjustment screw 7 that is arranged to contact a stop surface 8 formed inside a recess within the cutting head 2. Accordingly, the end portion of the adjustment screw 7 constitutes a stop that limits the position of the cutting head 2. Hence, when the adjustment screw 7 has been set at the desired position, and the cutting head rotated such that the stop surface 8 engages the front end of the adjustment screw 7, the locking screws 6 are used to fix the cutting head 2 such that the cutting head 2 is immovable with respect to the tool body 10.

As a consequence of such adjustment, the orientation of the cutting edge 3, and in particular the orientation of the wiper edge 32, with respect to the tool body is changed. In this way, when the turning tool is mounted to a machine tool and arranged for machining a workpiece, it is possible to adjust the orientation of the cutting edge, and in particular the orientation of the wiper edge, in relation to the workpiece surface to be machined.

The position of the cutting head 2 with respect to the tool body 10 is visibly indicated by a scale 9 applied to the tool body 10 and cutting head 2. In the illustrated embodiment, the scale 9 is a Vernier scale. For clarity, the scale 10 is left out in fig. 3 and only shown in fig. 1.

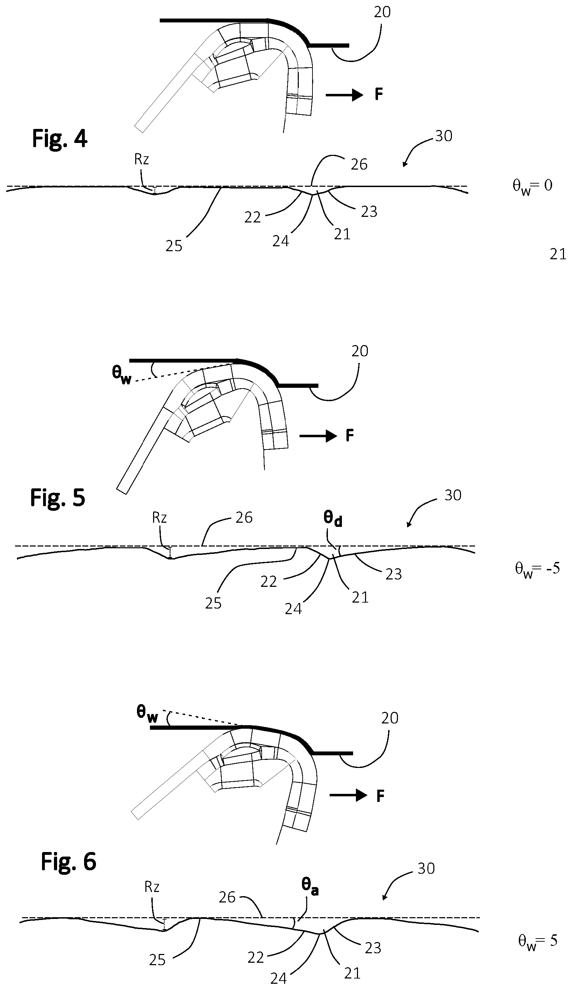

The resulting topography of the machined surface caused by different orientations of the wiper edge 32 is illustrated in figs. 4-6, wherein the orientation of the cutting insert 1 with respect to a machined surface 20 of a workpiece is illustrated in connection with respective resulting topographies of the machined surfaces 20, in this case illustrated as roughness profiles 30 of the machined surfaces 20. The roughness profiles 30 include grooves separated by ridges 21 caused by the feed of the tool during rotation of the workpiece. Random variations and noise have been removed by filtering the signals obtained from the measurement of the profile.

Each of the profiles 30 includes multiple recurring ridges 21, each comprising, in a feed direction of the turning tool, an ascending portion 22, a descending portion 23 and a peak 24. Between the ridges, there are valleys 25 located at a nominal machined surface 26.

In the illustrated embodiment, the misalignment angle θ_{w} that the wiper edge forms to the surface being machined is used as a measure of the misalignment of the wiper edge with respect to the workpiece. A misalignment angle θ_{w} equal to zero, illustrated in fig. 4, in which the wiper edge extends in parallel with the machined surface, corresponds to no misalignment. As seen in the resulting profile 30 of the surface, illustrated in fig. 4, the machined surface is rather smooth, wherein the valleys 25 are much wider than the ridges 21. The width of the ridges 21 will depend on the feed rate in relation to the length of the wiper edge. In practice, the wiper edge usually has a slight curvature (i.e., a large radius of curvature) which makes it impossible to obtain a surface that completely corresponds to the nominal machined surface 26. For the purposes of the present invention, though, and as illustrated in the figures, the wiper edge can be approximated by a straight line. Also, by using the solution according to this disclosure wherein the orientation of the cutting edge is adjusted, it could be beneficial to use a wiper edge with greater radius of curvature, i.e., closer to being straight, than what is conventionally used. Thus, if considering the wiper edge 32 in the illustrated embodiment as completely straight, the resulting ridges 21 illustrated in fig. 4 would be the result of a too short wiper edge and/or too great feed rate used when machining. A complete elimination of the ridges 21 may not always be desirable, though, since this might require an unreasonably low feed rate and/or an extension of the wiper edge that would result in too great cutting forces.

When the misalignment angle θ_{w} is non-zero, a topography of the machined surface will arise that is less smooth, wherein the ridges 21 are asymmetric, higher, and wider. Therefore, by analyzing the topography of the machined surface, and in particular the profiles 30 shown in figs. 4-6, it may be possible to estimate the misalignment angle θ_{w}, i.e., the misalignment of the wiper edge with respect to the machined surface.

In fig. 5, the misalignment angle θ_{w} is -5°, resulting in a roughness profile wherein the valleys 25 are short and the ridges 21 are asymmetric, having short ascending portions 22 but long descending portions 23. The internal angle θ_{d} formed between the descending portions 23 and the nominal machined surface 26 corresponds to the negative misalignment angle θ_{w} between the wiper edge and the machined surface 20 of the workpiece. In other words, after determining that the descending portion 23 is longer than the ascending portion 22, it can be concluded that the misalignment angle θ_{w} = - θ_{d}.

In fig. 6, the misalignment angle θ_{w} is 5°, resulting in a roughness profile wherein the valleys 25 are short and the ridges 21 are asymmetric, having long ascending portions 22 but short descending portions 23. The internal angle θₐ formed between the ascending portions 22 and the nominal machined surface 26 corresponds to the positive misalignment angle θ_{w} between the wiper edge and the machined surface 20 of the workpiece. In other words, after determining that the ascending portion 22 is longer than the ascending portion 23, it can be concluded that the misalignment angle θ_{w} = θₐ.

Hence, both the magnitude and the direction of misalignment can be determined from the roughness profile. Accordingly, it may therefore be possible to, based only on the profile 30, corresponding to the first topography, correctly adjust the orientation of the cutting edge for subsequent machining of the workpiece.

A different approach that does not require detailed analysis of the profile but is based on a parameter of the roughness is also possible. Accordingly, such alternative approach may require a less complex analysis of the profile. On the other hand, it may require additional machining operations with different orientations of the cutting edge.

For example, the mean roughness depth Rz may be considered for the analysis. For illustrative purposes, the mean roughness depth Rz is shown in figs. 4-6 as a single depth. However, this parameter is calculated as a mean for multiple ridges along the profile.

By first measuring the mean roughness depth Rz of the profile (corresponding to the first topography), and thereafter adjusting the orientation of the cutting edge and machining the workpiece and measuring the mean roughness depth Rz again (corresponding to a comparative topography), it is possible to determine the misalignment of the wiper edge and adjust the orientation of the cutting edge accordingly, although it may require repeating the procedure multiple times.

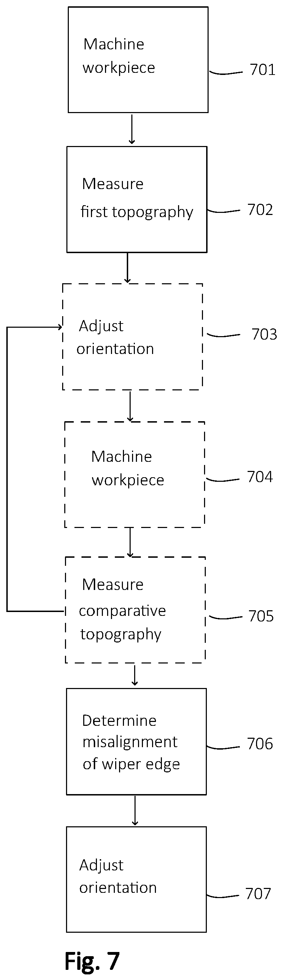

In the following, a method according to the invention will be described with reference to fig. 7 which is a flowchart indicating the steps of the method. Steps that are optional are illustrated by dashed lines.

In a first step 701, a surface of the workpiece is machined using the turning tool. The machining may for example correspond to a single pass of a longitudinal external turning operation, i.e., wherein the turning tool is moved along a direction parallel with the rotational axis of the workpiece while the cutting edge of the turning tool engages the exterior of the rotating workpiece.

In a second step 702, a first topography of the machined surface is measured. This can for example be achieved by using a profilometer to detect one or more profiles of the machined surface in a direction parallel with the rotational axis of the workpiece. In such case, the first topography considered may be the measured profile or a filtered profile, or a roughness parameter of such profile, such as Ra or Rz.

If a roughness parameter is measured and considered as the first topography, and in particular if the roughness that would be obtainable with a perfectly aligned wiper edge is unknown, the method would include, in a third step 703, adjusting the orientation of the cutting edge with respect to the workpiece, and, in a fourth step 704, machining the surface of the workpiece using the turning tool, and, in fifth step 705, measuring a comparative topography, i.e., the roughness parameter, of the newly machined surface.

The direction and amount of adjustment of the orientation of the cutting edge in step 703 may be decided by an operator of the machine based on his or her knowledge and experience. Predefined guidelines of what adjustment to apply may also be used. The steps 703-705 of adjusting the orientation, machining the workpiece and measuring a comparative topography may be repeated as many times as required. The direction and amount of adjustment of the orientation of the cutting edge for such further adjustments is preferably based on the previously measured comparative topography and its relation to the first topography. For example, if the comparative topography indicates a better alignment of the wiper edge than the first topography, a further adjustment of the orientation of the cutting edge in the same direction may be applied.

In step 706, the misalignment of the cutting edge is determined (i.e., the misalignment of the cutting edge as originally oriented, resulting in the first topography). With reference to the example in which a roughness parameter is considered as the topography, the misalignment may correspond to the difference between the cutting edge orientation that provided the first topography and the cutting edge orientation that was found to provide the most optimal comparative topography (e.g., the smallest roughness parameter).

In step 707, the orientation of the cutting edge with respect to the workpiece is adjusted based on the determined misalignment. Hence, once again with reference to the example in which a roughness parameter is considered as the topography, no adjustment of the orientation of the cutting edge is required if the last used orientation was also the one that resulted in the smallest roughness parameter.

Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the present invention is accordingly not to be limited but by the scope of the appended claims.

## Claims

1. A method for adjusting the orientation of a cutting edge (3) of a turning tool with respect to a workpiece (20), wherein the cutting edge (3) includes a wiper edge (32), and wherein the method comprises the steps of:
- machining (701) a surface of the workpiece (20) using the turning tool;
**characterized in that** the method further comprises the steps of:
- measuring (702) a first topography of the machined surface;
- determining (706) a misalignment of the wiper edge (32) with respect to the surface based on the first topography of the machined surface; and
- adjusting (707) the orientation of the cutting edge (3) with respect to the workpiece (20) based on the misalignment.

2. A method according to claim 1, wherein the misalignment is defined by an angle of misalignment (θ_{w}) that corresponds to the angle that the wiper edge forms to the machined surface, and wherein an angle of zero degrees corresponds to no misalignment.

3. A method according to any of the previous claims, wherein the first topography corresponds to a profile (30) of the surface.

4. A method according to claim 3, wherein the profile includes multiple ridges (21) extending from a nominal machined surface (26), wherein each ridge (21), in the feed direction (F), includes an ascending portion (22) extending to a peak (24) of the ridge (21) from a valley (25) located at the nominal machined surface (26) between the ridge (21) and a preceding ridge, followed by a descending portion (23) extending from the peak (24) of the ridge (21) to a valley located at the nominal machined surface (26) between the ridge (21) and a following ridge, and wherein the misalignment of the wiper edge (32) is determined based on the length and inclination of the ascending portions (22) and/or the descending portions (23) with respect to the nominal machined surface (26).

5. A method according to claims 2 and 4, wherein, if at least one of the ascending portion and the descending portion of each ridge is longer than the adjacent valley, the internal angle (θₐ, θ_{d}) between the nominal machined surface and the longest one of the ascending portion and the descending portion is identified as the angle of misalignment (θ_{w}).

6. A method according to claim 5, wherein the angle of misalignment (θ_{w}) is negative if the descending portion is longer than the ascending portion, and positive if the ascending portion is longer than the descending portion.

7. A method according to any of the claims 1 or 2, wherein the first topography is defined by a parameter of the roughness of the surface.

8. A method according to claim 7, wherein the parameter of the roughness of the surface is the average roughness Ra or the mean roughness depth Rz of a profile of the surface.

9. A method according to any of the previous claims, wherein the method further includes, after measuring the first topography of the surface and before determining the misalignment, performing one or more times the steps of:
- changing (703) the orientation of the cutting edge with respect to the workpiece;
- machining (704) a surface of the workpiece using the turning tool; and
- measuring (705) a comparative topography of the machined surface;
and wherein the misalignment of the wiper edge is determined based on the difference between the first topography and the one or more comparative topographies.

## Patentansprüche

1. Verfahren zum Einstellen der Ausrichtung einer Schneidkante (3) eines Drehwerkzeugs in Bezug auf ein Werkstück (20), wobei die Schneidkante (3) eine Wischkante (32) umfasst und wobei das Verfahren die folgenden Schritte umfasst:
- Bearbeiten (701) einer Oberfläche des Werkstücks (20) unter Verwendung des Drehwerkzeugs;
**dadurch gekennzeichnet, dass** das Verfahren ferner die folgenden Schritte umfasst:
- Messen (702) einer ersten Topographie der bearbeiteten Oberfläche;
- Bestimmen (706) einer Fehlausrichtung der Wischkante (32) in Bezug auf die Oberfläche auf der Grundlage der ersten Topographie der bearbeiteten Oberfläche; und
- Anpassen (707) der Ausrichtung der Schneidkante (3) in Bezug auf das Werkstück (20) auf der Grundlage der Fehlausrichtung.

2. Verfahren nach Anspruch 1, wobei die Fehlausrichtung durch einen Fehlausrichtungswinkel (θ_{w}) definiert ist, der dem Winkel entspricht, den die Wischkante mit der bearbeiteten Oberfläche bildet, und wobei ein Winkel von null Grad keiner Fehlausrichtung entspricht.

3. Verfahren nach einem der vorhergehenden Ansprüche, wobei die erste Topografie einem Profil (30) der Oberfläche entspricht.

4. Verfahren nach Anspruch 3, wobei das Profil mehrere Kanten (21) umfasst, die sich von einer nominalen bearbeiteten Oberfläche (26) erstrecken, wobei jede Kante (21) in Vorschubrichtung (F) einen ansteigenden Abschnitt (22) umfasst, der sich von einem Tal (25), das sich an der nominalen bearbeiteten Oberfläche (26) zwischen der Kante (21) und einer vorhergehenden Kante befindet, zu einem Scheitelpunkt (24) der Kante (21) erstreckt, gefolgt von einem abfallenden Abschnitt (23), der sich vom Scheitelpunkt (24) der Kante (21) bis zu einem Tal erstreckt, das sich an der nominalen bearbeiteten Oberfläche (26) zwischen der Kante (21) und einer nachfolgenden Kante befindet, und wobei die Fehlausrichtung der Wischkante (32) auf der Grundlage der Länge und Neigung der ansteigenden Abschnitte (22) und/oder der abfallenden Abschnitte (23) in Bezug auf die nominale bearbeitete Oberfläche (26) bestimmt wird.

5. Verfahren nach den Ansprüchen 2 und 4, wobei, wenn mindestens einer der ansteigenden Abschnitte und der abfallenden Abschnitte jeder Kante länger ist als das benachbarte Tal, der Innenwinkel (θₐ, θ_{d}) zwischen der nominalen bearbeiteten Oberfläche und dem längsten der ansteigenden Abschnitte und der abfallenden Abschnitte als der Fehlausrichtungswinkel (θ_{w}) identifiziert wird.

6. Verfahren nach Anspruch 5, wobei der Fehlausrichtungswinkel (θ_{w}) negativ ist, wenn der abfallende Abschnitt länger als der ansteigende Abschnitt ist, und positiv, wenn der ansteigende Abschnitt länger als der abfallende Abschnitt ist.

7. Verfahren nach einem der Ansprüche 1 oder 2, wobei die erste Topografie durch einen Parameter der Rauheit der Oberfläche definiert ist.

8. Verfahren nach Anspruch 7, wobei der Parameter der Rauheit der Oberfläche die durchschnittliche Rauheit Ra oder die mittlere Rauheit Rz eines Profils der Oberfläche ist.

9. Verfahren nach einem der vorhergehenden Ansprüche, wobei das Verfahren nach dem Messen der ersten Topographie der Oberfläche und vor dem Bestimmen der Fehlausrichtung zusätzlich ein- oder mehrmals die folgenden Schritte umfasst:
- Ändern (703) der Ausrichtung der Schneidkante in Bezug auf das Werkstück;
- Bearbeiten (704) einer Oberfläche des Werkstücks unter Verwendung des Drehwerkzeugs; und
- Messen (705) einer Vergleichstopographie der bearbeiteten Oberfläche;
und wobei die Fehlausrichtung der Wischkante auf der Grundlage der Differenz zwischen der ersten Topografie und der einen oder den mehreren Vergleichstopografien bestimmt wird.

## Revendications

1. Procédé d'ajustement de l'orientation d'une arête de coupe (3) d'un outil de tournage par rapport à une pièce à usiner (20), l'arête de coupe (3) comprenant une arête d'essuyage (32), le procédé comprenant les étapes consistant à :
- usiner (701) une surface de la pièce à usiner (20) à l'aide de l'outil de tournage ;
**caractérisé en ce que** le procédé comprend en outre les étapes consistant à :
- mesurer (702) une première topographie de la surface usinée ;
- effectuer la détermination (706) d'un désalignement de l'arête d'essuyage (32) par rapport à la surface sur la base de la première topographie de la surface usinée ; et
- ajuster (707) l'orientation de l'arête de coupe (3) par rapport à la pièce à usiner (20) sur la base du désalignement.

2. Procédé selon la revendication 1, dans lequel le désalignement est défini par un angle de désalignement (θ_{w}) qui correspond à l'angle que forme l'arête d'essuyage avec la surface usinée, et dans lequel un angle de zéro degré correspond à l'absence de désalignement.

3. Procédé selon l'une quelconque des revendications précédentes, dans lequel la première topographie correspond à un profil (30) de la surface.

4. Procédé selon la revendication 3, dans lequel le profil comprend une pluralité de crêtes (21) s'étendant à partir d'une surface usinée nominale (26), chaque crête (21), dans la direction d'avance (F), comprenant une portion ascendante (22) s'étendant jusqu'à un sommet (24) de la crête (21) à partir d'une vallée (25) située à la surface usinée nominale (26) entre la crête (21) et une crête précédente, suivie d'une portion descendante (23) s'étendant du sommet (24) de la crête (21) jusqu'à une vallée située à la surface usinée nominale (26) entre la crête (21) et une crête suivante, et dans lequel le désalignement de l'arête d'essuyage (32) est déterminé sur la base de la longueur et de l'inclinaison des portions ascendantes (22) et/ou des portions descendantes (23) par rapport à la surface usinée nominale (26).

5. Procédé selon les revendications 2 et 4, dans lequel, si au moins l'une de la portion ascendante et de la portion descendante de chaque crête est plus longue que la vallée adjacente, l'angle interne (θₐ, θ_{d}) entre la surface usinée nominale et la plus longue des portions ascendante et descendante est identifié comme étant l'angle de désalignement (θ_{w}).

6. Procédé selon la revendication 5, dans lequel l'angle de désalignement (θ_{w}) est négatif si la portion descendante est plus longue que la portion ascendante, et positif si la portion ascendante est plus longue que la portion descendante.

7. Procédé selon l'une quelconque des revendications 1 ou 2, dans lequel la première topographie est définie par un paramètre de rugosité de la surface.

8. Procédé selon la revendication 7, dans lequel le paramètre de rugosité de la surface est la rugosité moyenne Ra ou la profondeur moyenne de rugosité Rz d'un profil de la surface.

9. Procédé selon l'une quelconque des revendications précédentes, dans lequel le procédé comprend en outre, après la mesure de la première topographie de la surface et avant la détermination du désalignement, l'exécution une ou plusieurs fois des étapes consistant à :
- modifier (703) l'orientation de l'arête de coupe par rapport à la pièce à usiner ;
- usiner (704) une surface de la pièce à usiner à l'aide de l'outil de tournage ; et
- mesurer (705) une topographie comparative de la surface usinée ; et dans lequel le désalignement de l'arête d'essuyage est déterminé sur la base de la différence entre la première topographie et la ou les topographies comparatives.
